# EUROPÄISCHE PATENTSCHRIFT

(11) **EP 2 159 175 B1**
(45) Veröffentlichungstag und Bekanntmachung des Hinweises auf die Patenterteilung: **21.12.2011**
(21) Anmeldenummer: 09010987.7
(22) Anmeldetag: 27.08.2009
(51) Int. Cl.: B65G 49/08

(54) **Übergabevorrichtung**
Transfer device
Dispositif de transfert

(30) Priorität: 01.09.2008 DE 102008045273
(43) Veröffentlichungstag der Anmeldung: 03.03.2010
(73) Patentinhaber: Keller H.C.W. GmbH, 49479 Ibbenbüren-Laggenbeck (DE)
(72) Erfinder: Averbeck, Laurenz, 49186 Bad Iburg (DE); Mansfeld, Michael, 49477 Ibbenbüren (DE); Esch,Tobias, 49479 Ibbenbüren (DE); Munzke, Stephan, 49525 Lengerich (DE)
(74) Vertreter: Busse & Busse

(56) Entgegenhaltungen:
- EP-A2- 1 262 430
- BE-A- 656 172

## Beschreibung

Die Erfindung bezieht sich auf eine Vorrichtung zur Übergabe von Formlingen von einer Endlosfördereinrichtung an ein Transportelement, das parallel zueinander angeordnete, beispielsweise leistenförmig ausgebildete sowie Abstellflächen aufweisende Transportteile umfasst, wobei das Transportelement aus einer in einer Ebene unterhalb der Endlosfördereinrichtung gelegenen Ausgangsstellung in eine angehobene Transportstellung überführbar ist, in der sich die Abstellflächen der Transportelement in einer Ebene oberhalb der Endlosfördereinrichtung erstrecken, wobei das Transportelement als Transportpalette ausgebildet ist. Übergabevorrichtungen für Formlinge, die beispielsweise einen Abschneider, der einen Tonstrang in Formlinge schneidet, nachgeordnet sind, dienen insbesondere dazu, die Transportelemente mit Formlingen zu beladen, um sie z.B. einem nachfolgenden Trocknungsprozess zuführen zu können. Bekannt ist, eine solche Übergabevorrichtung als Lattenautomat auszubilden, wobei die Formlinge über die Endlosfördereinrichtung transportiert werden, und die Latten als Transportelemente von unten zwischen Endlosfördereinrichtungen hindurch geführt und oberhalb von Segmenträdern liegen, über die die Latten soweit angehoben werden können, dass die Formlinge die Endlosfördereinrichtung nicht mehr berühren. Durch eine Weiterbewegung der Segmenträder können die mit den Formlingen beladenen beiden Latten in Längsrichtung aus dem Lattenautomat weggefördert werden.

Das Dokument EP 1 262 430 A2 offenbart eine Vorrichtung zur Übergabe von Gegenständen gemäß dem Oberbegriff des Anspruchs 1.

Nachteilig hierbei ist, dass nur Formlinge bestimmter Geometrie auf den Latten des Lattenautomaten abgelegt werden können. Da allerdings eine Vielzahl unterschiedlicher Geometrien von Formlingen und damit Formlinge unterschiedlichster Art zu fördern und für einen nachfolgenden Trocknungsvorgang zu übergeben sind, kann mit dem Lattenautomat herkömmlicher Art eine große Anzahl von Formlingen, wie sie typischerweise z.B. in Ziegeleien anfallen, heute nicht mehr gehandhabt werden.

Es ist Aufgabe der vorliegenden Erfindung, eine Vorrichtung der eingangs genannten Art derart weiterzubilden, dass Formlinge unterschiedlichster Geometrie übergeben werden können.

Zur Lösung dieser Aufgabe zeichnet sich die Vorrichtung der eingangs genannten Art dadurch aus, dass die Transportpalette mit mehr als zwei parallel zueinander mit Abstand vorgesehenen Transportteilen ausgebildet ist und die Endlosfördereinrichtung an einem Ausleger geführt ist, der im angehobenen Zustand der Transportpalette zwischen den Transportelementen gelegen ist. Damit ist eine Vorrichtung zur Verfügung gestellt, bei der bei Überführung der Transportpalette in die angehobene Transportstellung ein auf der Endlosfördereinrichtung geförderter Formling an mehr als einer Abstützstelle ergriffen und in eine relative Hochposition gegenüber der Endlosfördereinrichtung überführt werden kann. So kann die Transportpalette mit z.B. drei mit Abstand nebeneinander angeordneten Transportteilen ausgebildet sein, wobei in jeweils ein äußeres Transportteil und ein mittleres Transportteil z.B. ein Endlosförderband einer Endlosfördereinrichtung im angehobenen Zustand umgrenzt. Da das Endlosförderband an einem Ausleger bzw. Auslegerarm geführt ist, begrenzen zwei Transportelemente jeweils einen solchen Auslegerarm.

Die Transportpalette ist bevorzugt von einem Hubtisch in die erhöhte Transportstellung der seinerseits gezeigten Endlosförderer anhebbar, der insbesondere drei mit Abstand zueinander angeordneten Endlosförderbänder aufweist, die von einem separat zu steuernden Antrieb motorisch antreibbar sind.

Wenn eine Transportpalette Formlinge übernehmen soll, sind die Endlosförderbänder des Hubtisches zunächst wie sie der Geschwindigkeit der Endtosfördereinrichtung entspricht. Mit dieser Geschwindigkeit kann die Transportpalette bei einer weiteren Hubbewegung des Hubtisches ergriffen und angehoben werden, wonach dann die Endlosförderbänder des Hubtisches beschleunigt werden, so dass die Transportpalette mit den auf dieser abgestellten Formlingen aus der Vorrichtung abtransportiert werden kann. Der Ausleger bzw. die Auslegerarme sind bevorzugtermaßen von Unterstützungsrollen, die an einem Kettenband befestigt sind, untergriffen, die mithin in ihrer Bewegung an einem Ausleger bzw. Auslegerarm abrollen. Bevorzugtermaßen sind drei mit gleichem Abstand zueinander angeordnete Unterstützungsrollen vorgesehen, deren Abstand so aufeinander abgestimmt ist, dass der Ausleger bzw. der Auslegerarm immer von mind. einer Unterstützungsrollen untergriffen ist, wodurch wirksam Durchbiegungen eines Auslegerarms vorgebeugt ist.

Hinsichtlich wesentlicher weiterer Ausgestaltungen wird auf weitere Ansprüche, die nachfolgende Beschreibung und die Zeichnung verwiesen. In der Zeichnung zeigen:

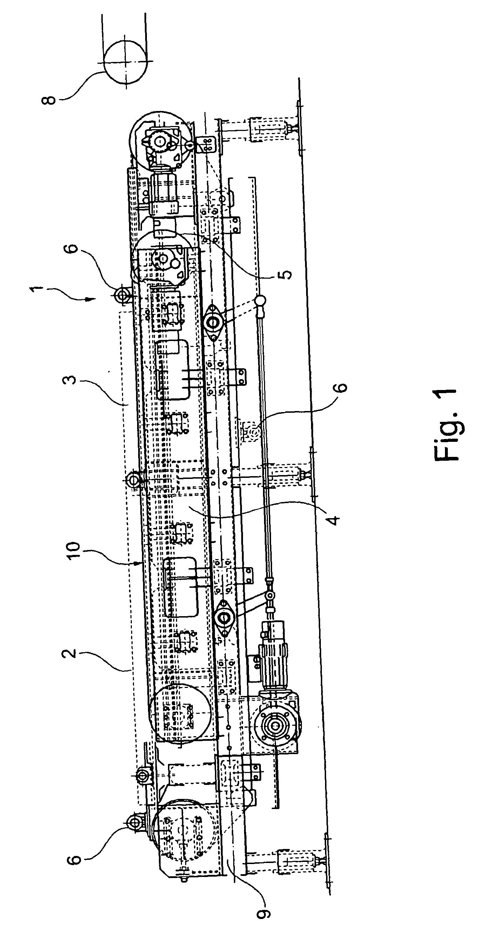

- Fig. 1: ein Ausführungsbeispiel einer Vorrichtung nach der Erfindung, in dem die Transportpalette einzuschieben und zu positionieren ist in einer schematischen Seitendarstellung;
- Fig. 2: das Ausführungsbeispiel nach Fig. 1 mit überführtem Hubtisch in eine erhöhte Warteposition;

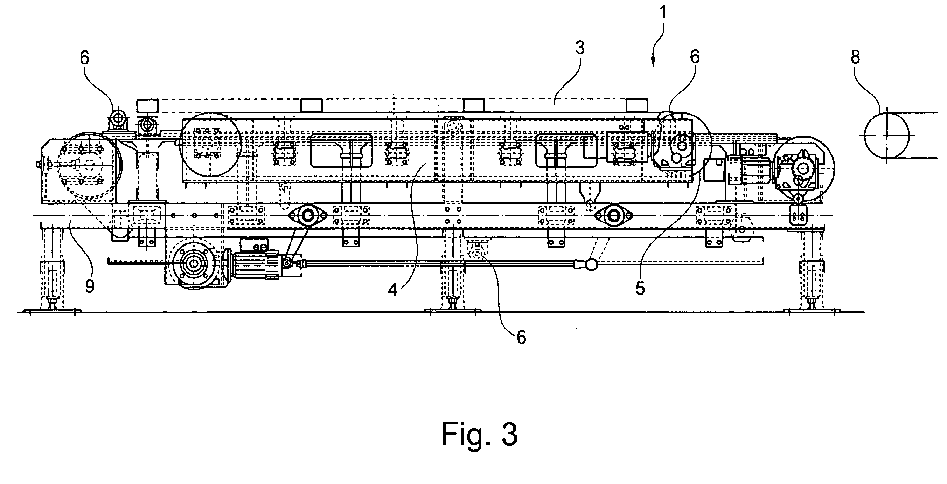

- Fig. 3: eine zu Fig. 2 analoge Darstellung mit angehobener Transport- palette in einer Höhe, wo sie relativ zu der Endlosfördereinrich- tung bewegt und damit abtransportiert werden kann, wiederum in einer schematischen Seitendarstellung;
- Fig. 4: das Ausführungsbeispiel nach Fig. 1 in einem Zustand, wo die Transportpalette ausgefahren wird;
- Fig. 5: in einer schematischen Schnittdarstellung das Kettenband;
- Fig. 6: in einer Schnittdarstellung des Hubtisches mit Darstellung der Transportpaletten (ausschnittsweise), im ausgefahrenen Zu- stand der Zylinder, und
- Fig. 7: eine zu Fig. 6 analoge Darstellung mit eingefahrenem Zylinder.

In der Zeichnung sind übereinstimmende Teile mit übereinstimmenden Bezugsziffern versehen. Die Vorrichtung zum Übergeben von Formlingen ist allgemein mit 1 beziffert. Diese hat einen Ausleger 2, auf dem zwei mit Abstand nebeneinander angeordnete Förderbänder als Endlosfördereinrichtung geführt sind. Von dieser Endlosfördereinrichtung des Auslegerarmes sollen Formlinge auf eine Transportpalette übergeben werden, die mit 3 beziffert ist und die auf einem allgemein mit 4 bezifferten Hubtisch liegt. Dieser Hubtisch seinerseits hat drei mit Abstand nebeneinander angeordnete Endlosriemenbänder 5, die von einem eigenen Motor antreibbar sind. Der Ausleger 2 wird untergriffen von drei Unterstützungsrollen 6, um einer Durchbiegung vorzubeugen. Bei 8 ist eine weitere Fördereinrichtung angedeutet, um eine Transportpalette 3, auf der entsprechende Formlinge abgestellt werden, einer Weiterverarbeitung, z.B. einem weiteren Trocknungsprozess zuführen zu können.

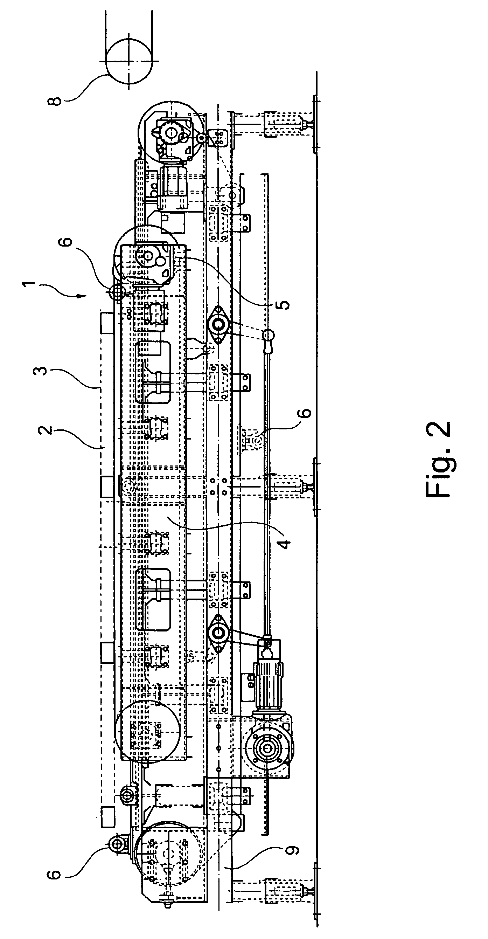

In der Darstellung nach Fig. 2 ist die Transportpalette durch den Hubtisch 4 in eine Warteposition angehoben, wodurch erreicht wird, dass der Motor sanfter auf einen Hub von z.B. 100 mm gebracht werden kann. Danach wird die Transportpalette auf eine Höhe von z.B. 100 mm angehoben und damit in eine Position, in der sie relativ zu den Riemenbändern 11 der Endlosfördereinrichtung 10 bewegt werden können.

Ein Signal zum Abheben der Formlinge kann über eine Lichtschranke gegeben werden, welche auf einer Schiene in Höhe der abzunehmenden Formlinge befestigt ist. Der Schaltpunkt der Lichtschranke ist so einzustellen, dass die Formlinge in der Mitte der kleinen Palette liegen. Die drei Riemenbänder des Hubtisches 4 beschleunigen zur gleichen Zeit auf z.B. eine Riemenbandgeschwindigkeit des Auslegers 2 von 0,355 m/s. Diese Geschwindigkeit wird erreicht in der maximalen Hubstellung von 100 mm. Nach einer kurzen Gleichlaufphase der Riemenbänder der Endlosfördereinrichtung 10 beschleunigen die Riemenbänder 5 des Hubtisches 4 die beladene Transportpalette auf eine Geschwindigkeit von beispielsweise 1,2 m/s. Die Unterstützungsrollen 6 hinter und vor der Transportpalette fahren beim Beschleunigen das gleiche Geschwindigkeitsprofil wie die der Riemenbänder 5 des Hubtisches 4.

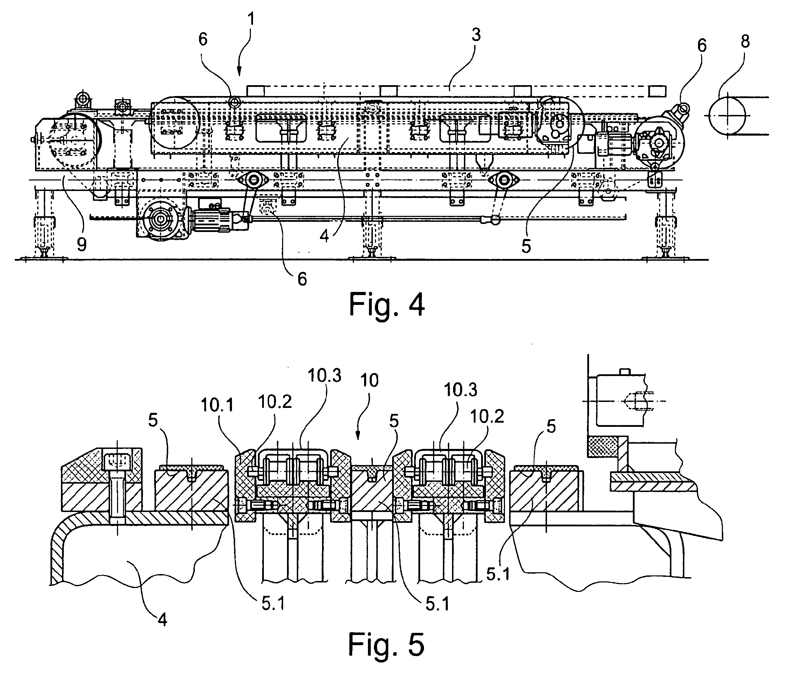

In Fig. 4 ist das Ausfahren der Transportpalette veranschaulicht. Die Transportpalette 3 wird mit einer Geschwindigkeit von z.B. 1,2 m/s aus der Vorrichtung ausgefahren. Die rechte Unterstützungsrolle 6 taucht vor der Transportpalette an der Antriebsrolle der Kettenbahn 9 nach unten ab, so dass die Transportpalette ungehindert in Richtung der weiteren Transportvorrichtung 8 weiter befördert wird.

Nachdem die rechte Unterstützungsrolle 6 abgetaucht ist, wird der Ausleger 2 nur noch durch die linke Unterstützungsrolle abgestützt. Diese Unterstützungsrolle fährt bis zur Anfangsposition der rechten Unterstützungsrolle hinter der Transportpalette her und bleibt in dieser Position stehen. Die dritte Unterstützungsrolle 6 übernimmt dann die Anfangsposition der ersten Unterstützungsrolle 6, so dass wieder zwei Unterstützungsrollen 6 den Ausleger 2 abstützen.

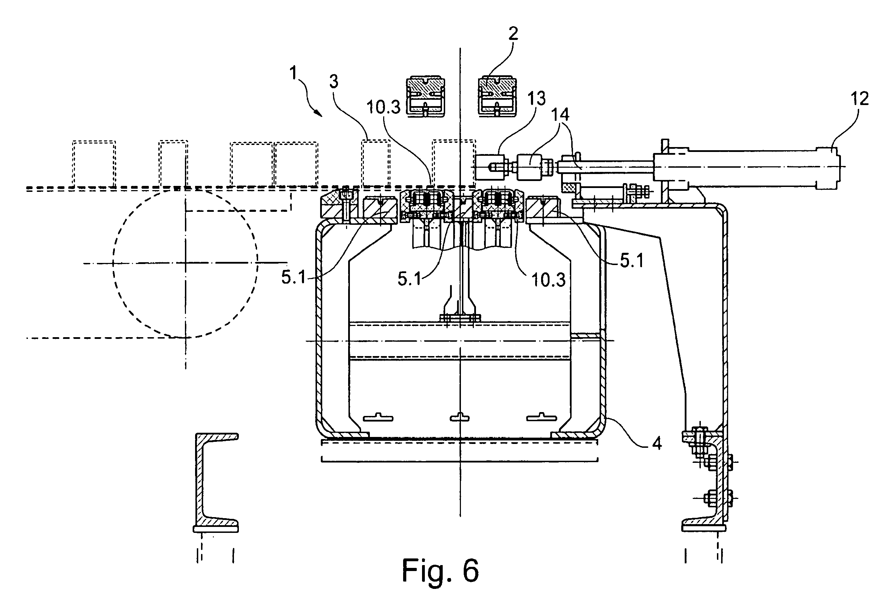

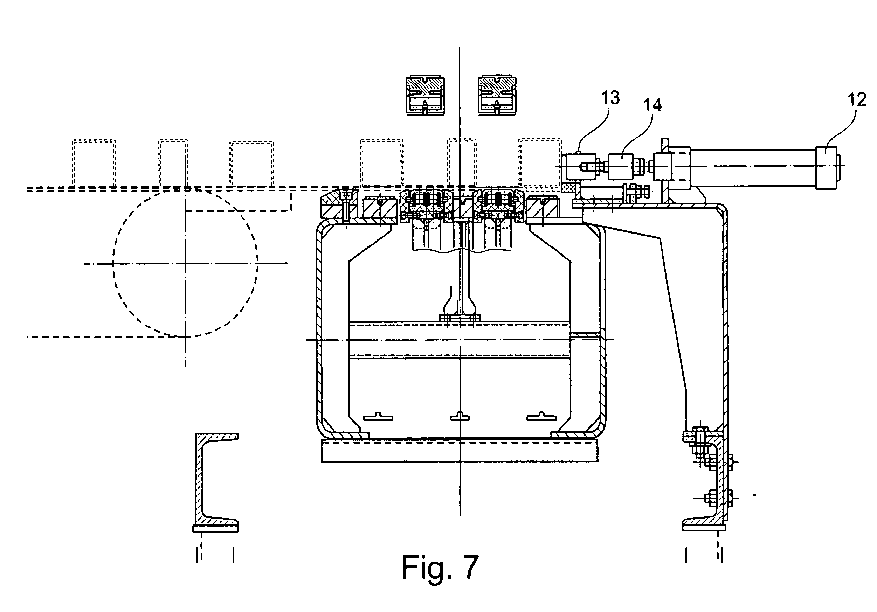

In Fig. 5 ist in geschnittener Teilansicht das Kettenband 10 näher veranschaulicht, das als Duplexrollenkettenführung ausgebildet ist, seitliche Führungen 10.1 aufweist sowie einen verlängerten Kettenbolzen 10.2, um ein Herausgeben der Duplexrollenketten aus der Kettenführung beim Einziehen einer Transportpalette zu verhindern. Oberseitig sind Kunststoffclips 10.3 vorgesehen. Auf dem Hubtisch 4 ist ersichtlich, dass dort insgesamt drei nebeneinander angeordnete Riemenbänder 5 an Führungen 5.1 geführt sind, zwischen denen sich die jeweiligen Rollenketten erstrecken. Die Fig. 6 und 7 veranschaulichen in zwei Positionen des dort dargestellten Zylinders, wie die Transportpalette 3 zu positionieren ist. Zunächst wird die Transportpalette 3 durch eine nicht näher dargestellte Keilriemenbahn seitlich in die Vorrichtung eingeschoben. Diese Keilriemenbahn fährt die Transportpalette soweit in Position, dass die Stabmagneten 13 an den Kolbenstangen der Zylinder 12 durch ihre Magnetkraft die Transportpalette festhalten können. Um ein Anhaften der Stabmagneten 13 an der Transportpalette 3 sicherzustellen, wurde eine zwischengeschaltete Flexokupplung 14 vorgesehen. Diese Flexokupplung ermöglicht einen geringen Winkelausgleich, falls die Transportpalette 3 nicht exakt parallel eingeschoben werden sollte. Die Zylinder 12 ziehen nun die Transportpalette quer über die Kunststoffclips 10.3.

## Patentansprüche

1. Vorrichtung zur Übergabe von Formlingen von einer Endlosfördereinrichtung (10) an ein Transportelement (3), das parallel zueinander angeordnete, beispielsweise leistenförmig ausgebildete sowie Abstellflächen aufweisende Transportteile umfasst, wobei das Transportelement (3) aus einer in einer Ebene unterhalb der Endlosfördereinrichtung (10) gelegenen Ausgangsstellung in eine angehobene Transportstellung überführbar ist, in der sich die Abstellflächen der Transportelemente in einer Ebene oberhalb der Endlosfördereinrichtung (10) erstrecken, wobei das Transportelement (3) als Transportpalette ausgebildet ist, **dadurch gekennzeichnet, dass** die Transportpalette mit mindestens zwei parallel zueinander mit Abstand vorgesehenen Transportteilen ausgebildet ist und die Endlosfördereinrichtung (10) an einem Ausleger (2) geführt ist, der im angehobenen Zustand der Transportpalette (3) zwischen den Transportelementen gelegen ist.

2. Vorrichtung nach Anspruch 1, **dadurch gekennzeichnet, dass** das Transportelement (3) über einen Hubtisch (4) anhebbar ist, an dem seinerseits ein Endlosförderer (5) geführt ist zwecks Transportes einer Transportpalette (3).

3. Vorrichtung nach Anspruch 2, **dadurch gekennzeichnet, dass** der Endlosförderer (5) des Hubtisches drei parallel angeordnete Endlosriemen aufweist.

4. Vorrichtung nach einem der Ansprüche 1 bis 3, **dadurch gekennzeichnet, dass** die Transportpalette (3) seitlich in die Vorrichtung in einer Ebene unterhalb der Endlosfördereinrichtung (10) einbringbar ist.

5. Vorrichtung nach einem der Ansprüche 1 bis 4, **dadurch gekennzeichnet, dass** ein Zylinder (12) zum Positionieren der Transportpalette (3) vorgesehen ist.

6. Vorrichtung nach Anspruche 5, **dadurch gekennzeichnet, dass** der Zylinder (12) mit einem Stabmagneten (13) versehen und die Transportpalette (3) zumindest bereichsweise metallisch ausgebildet ist.

7. Vorrichtung nach einem der Ansprüche 5 oder 6, **dadurch gekennzeichnet, dass** zwischen der zu positionierten Transportpalette (3) und dem Zylinder (12) ein Stabmagnet (13) und/oder ein Kupplungselement (14) vorgesehen ist.

8. Vorrichtung nach einem der Ansprüche 1 bis 7, **dadurch gekennzeichnet, dass** dem Ausleger (2) eine Kettenbahn (10) mit daran befestigten Unterstützungsrollenzugeordnet ist und die Kettenbahn (10) als motorisch antreibbares Endloskettenband ausgebildet ist.

9. Vorrichtung nach Anspruch 8, **dadurch gekennzeichnet, dass** an der Kettenbahn (10) insgesamt zwei oder mehr mit gleichem Abstand zueinander vorgesehenen Unterstützungsrollen vorgesehen sind, die an der Unterseite des Auslegers abrollen.

10. Vorrichtung nach einem der Ansprüche 1 bis 9, **dadurch gekennzeichnet, dass** der Ausleger (2) zwei mit Abstand zueinander angeordnete Auslegerarme aufweist.

11. Vorrichtung nach einem der Ansprüche 2 bis 10, **dadurch gekennzeichnet, dass** der Hubtisch (4) insgesamt mindestens zwei mit Abstand zueinander angeordnete Riemenbänder (5.1) aufweist.

12. Vorrichtung nach Anspruch 11, **dadurch gekennzeichnet, dass** oberseitig jeweils ein Karbonelement zur Anlage an die Palette (3) aufweisen.

13. Vorrichtung nach einem der Ansprüche 8 bis 12, **dadurch gekennzeichnet, dass** die Kettenbahn (10) als Duplexrollenkette ausgebildet ist und an ihrer Oberseite ein Kunststoffelement (10.3) aufweist.

## Claims

1. Arrangement for transferring blanks from a continuous conveyor arrangement (10) to a transporting element (3), which latter comprises transporting parts arranged in parallel with one another which take a strip-like form for example and which have carrying surfaces, the transporting element (3) being able to be changed over from a starting position situated in a plane below the continuous conveyor arrangement (10) to a raised transporting position in which the carrying surfaces of the transporting elements extend in a plane above the continuous conveyor arrangement (10), the transporting element (3) taking the form of a transporting pallet, **characterised in that** the transporting pallet is formed to have at least two transporting parts which are provided in parallel with one another at a distance, and the continuous conveyor arrangement (10) is guided at a boom (2) which, when the transporting pallet (3) is in the raised state, is situated between the transporting elements.

2. Arrangement according to claim 1, **characterised in that** the transporting element (3) can be raised by means of a lifting table (4), on which a continuous conveyor (5) is guided in turn for the purpose of transporting a transporting pallet (3).

3. Arrangement according to claim 2, **characterised in that** the continuous conveyor (5) of the lifting table has three continuous belts arranged in parallel.

4. Arrangement according to one of claims 1 to 3, **characterised in that** the transporting pallet (3) can be introduced into the arrangement laterally in a plane below the continuous conveyor arrangement (10).

5. Arrangement according to one of claims 1 to 4, **characterised in that** a cylinder (12) is provided for positioning the transporting pallet (3).

6. Arrangement according to claim 5, **characterised in that** the cylinder (12) is provided with a bar magnet (13) and the transporting pallet (3) is of a metallic form at least in a region or regions.

7. Arrangement according to either of claims 5 and 6, **characterised in that** a bar magnet (13) and/or a coupling member (14) is provided between the transporting pallet (3) to be positioned and the cylinder (12).

8. Arrangement according to one of claims 1 to 7, **characterised in that** the boom (2) has associated with it a chain conveyor (10) having supporting rollers fastened to it and the chain conveyor (10) takes the form of a continuous chain conveyor able to be driven by motor means.

9. Arrangement according to claim 8, **characterised in that** there are provided on the chain conveyor (10) a total of two or more supporting rollers which are provided at equal distances from one another and which roll on the underside of the boom.

10. Arrangement according to one of claims 1 to 9, **characterised in that** the boom (2) has two boom arms which are arranged at a distance from one another.

11. Arrangement according to one of claims 2 to 10, **characterised in that** the lifting table (4) has a total of at least two belts (5.1) which are arranged at a distance from one another.

12. Arrangement according to claim 11, **characterised in that** each have on the upper side a carbon member to make contact with the pallet (3).

13. Arrangement according to one of claims 8 to 12, **characterised in that** the chain conveyor (10) takes the form of a twin-row roller chain and has a member (10.3) of plastics material on its upper side.

## Revendications

1. Dispositif de transfert d'ébauches d'un convoyeur sans fin (10) vers un élément de transport (3) comportant des pièces de transport installées parallèlement, réalisées par exemple sous la forme de longerons et comportant des surfaces de réception,
* l'élément de transport (3) pouvant être transféré d'une position de repos située dans un plan en dessous du convoyeur sans fin (10) dans une position de transport, relevée, dans laquelle les surfaces de réception des éléments de transport se trouvent dans un plan au-dessus du convoyeur sans fin (10),
* l'élément de transport (3) étant une palette de transport,
dispositif **caractérisé en ce que**
la palette de transport comporte au moins deux parties de transport, parallèles, distantes l'une de l'autre et le convoyeur sans fin (10) est guidé le long d'un bras (2) situé entre les éléments de transport lorsque la palette de transport (3) est en position relevée.

2. Dispositif selon la revendication 1,
**caractérisé en ce que**
l'élément de transport (3) peut être relevé au-dessus d'un plateau relevable (4) qui de son côté guide le convoyeur sans fin (5) pour transporter une palette (3).

3. Dispositif selon la revendication 2,
**caractérisé en ce que**
le convoyeur sans fin (5) du plateau relevable, comporte deux courroies sans fin, parallèles.

4. Dispositif selon l'une des revendications 1 à 3,
**caractérisé en ce que**
la palette de transport (3) peut être introduite latéralement dans le dispositif dans un plan situé en dessous du convoyeur sans fin (10).

5. Dispositif selon l'une des revendications 1 à 4,
**caractérisé par**
un vérin (12) pour positionner la palette de transport (3).

6. Dispositif selon la revendication 5,
**caractérisé en ce que**
le vérin (12) est muni d'un aimant (13) en forme de barreau et la palette de transport (3) est au moins en partie métallique.

7. Dispositif selon l'une des revendications 5 ou 6,
**caractérisé par**
un aimant en forme de barreau (13) entre la palette de transport (3) à positionner et le vérin (12) et/ou un élément d'accouplement (14).

8. Dispositif selon l'une des revendications 1 à 7,
**caractérisé en ce que**
le mas (2) est équipé d'un chemin à chaîne (10) avec des rouleaux de support fixés sur celui-ci et le chemin à chaîne (10) est un convoyeur sans fin entraîné par un moteur.

9. Dispositif selon la revendication 8,
**caractérisé en ce que**
le convoyeur à chaîne (10) comporte en tout deux ou plusieurs rouleaux de support équidistants et qui roulent sur le côté inférieur de la flèche.

10. Dispositif selon l'une des revendications 1 à 9,
**caractérisé en ce que**
le mas (2) comporte deux branches distantes l'une de l'autre.

11. Dispositif selon l'une des revendications 2 à 10,
**caractérisé en ce que**
le plateau relevable (4) comporte en tout au moins deux convoyeurs à courroie (5.1) écartés l'un de l'autre.

12. Dispositif selon la revendication 11,
**caractérisé en ce que**
du côté supérieur, il est prévu chaque fois un élément en carbone pour servir d'appui pour la palette (3).

13. Dispositif selon l'une des revendications 8 à 12,
**caractérisé en ce que**
le convoyeur à chaîne (10) est un convoyeur à chaîne à galets duplex et son côté supérieur comporte un élément en matière plastique (10.3).
